# EUROPEAN PATENT APPLICATION

(11) **EP 2 983 335 A1**
(43) Date of publication of application: **10.02.2016**
(21) Application number: 13882559.1
(22) Date of filing: 18.04.2013
(51) Int. Cl.: H04L 12/927

(54) **METHOD FOR CONTROLLING QUALITY OF SERVICE, APPLICATION SERVER AND TERMINAL**

(71) Applicant: Huawei Technologies Co., Ltd., Longgang District Shenzhen, Guangdong 518129 (CN)
(72) Inventor: LI, Yan, Guangdong 518129 Shenzhen (CN); WU, Wenfu, Guangdong 518129 Shenzhen (CN)
(74) Representative: Körber, Martin Hans
(86) International application number: PCT/CN2013/074344
(87) International publication number: WO 2014/169455

(57) **Abstract**

Embodiments of the present invention disclose a quality of service control method, an application server, and a terminal. In the method, an application server inserts a QoS control indication into an HTML page, receives an HTML page request of the terminal, and returns the page including the QoS quality of service QoS control indication to the terminal, so that the terminal parses the QoS control indication on the HTML page, and requests QoS control from a QoS control function entity of an operator, where the QoS control includes QoS status query and/or QoS improvement. Therefore, for a QoS control capability, interaction between the application server and a network operator is changed to interaction between the terminal and the network operator, and interaction between the application server and a Corresponding QoS control function entity of the network operator is not needed, thereby simplifying processing of the application server. In addition, the QoS control function entity of the network operator needs to interact only with a plug-in installed in a terminal browser by the network operator or with a universal capability open platform, and interaction with different application servers is prevented, thereby also simplifying implementation of the QoS control function entity and solving a problem of capability open fragmentation.

## Description

### TECHNICAL FIELD

The present invention relates to the communications field, and in particular, to a quality of service control method, an application server, and a terminal.

### BACKGROUND

A mobile terminal first sends IP packet data to a wireless base station through a wireless connection; the wireless base station sends the IP packet data to a system architecture evolution gateway (System Architecture Evolution Gateway, SAE GW); the SAE GW routes the IP packet data to an application server. The application server provides a corresponding packet service, and the application server mainly provides packet services, such as web browsing, FTP downloading, and instant messaging. The SAE GW also completes functions, such as charging and policy execution, for example, counting subscriber data traffic, so that a charging system deducts a fee conveniently. A policy and charging rules function entity (Policy and Charging Rules Function, PCRF) mainly performs a policy control function, for example, making different quality of service (Quality of Service, QoS) or charging policies for different services and delivering the policies to the SAE GW for execution. Many conventional mobile applications use a client-server model (Client-Server, CS). For example, QQ or MSN software needs to be installed so as to chat with another person. In the CS model, independent client software needs to be installed for each application. However, with formulation and improvement of the Hypertext Markup Language (Hypertext Markup Language, HTML) 5 standard, more services will be implemented by using a browser-server (Brower-Server, BS) model in the future, that is, all services are presented to a user by using a browser without installing additional software except the browser. For example, a WEB game, vegetable stealing at http://www.kaixin001.com and the like all belong to the BS model.

In the BS model, a terminal parses an HTML page, a cascading style sheet (Cascading Style Sheet, CSS) file, and a JAVA script that correspond to a service, so as to provide various services for the terminal. For each application, no additional client software needs to be provided, as long as a browser is installed in the terminal. It should be noted that different applications have different demands for mobile network transmission. For example, real-time communication, an online game, and the like have a strict requirement for a transmission delay; if the delay is too long, the real-time communication or the online game cannot be conducted. For another example, online video on demand has a specific requirement for bandwidth; a pause may occur when network bandwidth is quite low, and therefore smooth watching cannot be achieved. To meet QoS demands of different applications, the 3GPP standard defines the following policy control solutions:

A terminal requests a service, for example, watching a high definition video file by using a browser, from an application server. Because video transmission needs relatively high bandwidth, the application server requests QoS improvement, and service flow information and required bandwidth is included from a QoS control function entity of a mobile network operator. The QoS control function entity may be a PCRF network element of a mobile bandwidth network and may also be an independent capability open platform. The QoS control function entity generates a service-based policy and delivers the policy to an SAE GW. The SAE GW triggers a dedicated bearer establishment or modification procedure and instructs a wireless base station to reserve a wireless resource for a bearer. The dedicated bearer establishment or modification procedure is completed. The SAE GW returns an acknowledgement message to the QoS control function entity. The QoS control function entity returns, to the application server, information indicating that the QoS improvement succeeds. Once the QoS improvement is completed, a mobile network establishes a transmission channel with QoS guarantee from a UE to the SAE GW for service transmission, so as to meet demands of an application for a network transmission delay and bandwidth.

In the prior art, demands of different applications for network transmission QoS can be met; however, because a service provided by the application server is not limited to a user of a specific mobile network, the application server needs to interact with QoS control entities of different mobile network operators, which results in complex implementation of the application server and also results in complex implementation of the QoS control function entities. A network of China Mobile is used as an example. For example, an online game needs QoS improvement to meet a delay requirement, and then separate interaction with respective QoS control function entities of China Mobile, China Unicom, and China Telecom is needed. Open interfaces of all the QoS control function entities may be different, and the application server needs to be capable of dealing with this difference. In addition, for a QoS control function entity of a network operator, for example, interaction with different application servers is needed. This problem is generally called capability open fragmentation, which is one of reasons why it is difficult to popularize network capability opening.

In the prior art, another problem is: a QoS control capability provided by an operator, especially QoS improvement, generally needs to be paid because an additional wireless resource is reserved. If an application server makes a payment, there is no problem in the prior art. However, if a user makes a payment, an additional mechanism for interaction between the application server and the user needs to be introduced to the prior art, so as to ensure that the user is willing to pay for the QoS improvement, which also increases implementation complexity of an application.

### SUMMARY

### Disclosure of the Invention

### Technical Problems

An objective of embodiments of the present invention is to provide a quality of service control method, so as to solve a problem where interfaces are different when an application server interacts with QoS control entities of different network operators and a problem of capability open fragmentation of a QoS control entity.

### Solutions to Problems

### Technical Solutions

According to a first aspect, a quality of service control method includes:
receiving, by an application server, an HTML page request of a terminal;
inserting a quality of service QoS control indication into a Hypertext Markup Language HTML page; and
returning the HTML page including the quality of service QoS control indication to the terminal, so that the terminal requests QoS control from a QoS control function entity of an operator according to the QoS control indication on the HTML page, where the QoS control includes QoS status query and/or QoS improvement.

With reference to the first aspect, in a first possible implementation manner of the first aspect, the QoS control indication is a java script, a newly defined HTML tag, or an HTML tag of a newly added attribute.

With reference to the first possible implementation manner of the first aspect, in a second possible implementation manner of the first aspect, when the QoS control indication is a java script:
the java script requires the terminal to invoke a QoS query API, and if a delay of a returned value of the QoS query API is greater than a preset time value, the terminal invokes a QoS request API to request that the QoS be less than the preset time value.

With reference to the first possible implementation manner of the first aspect, in a third possible implementation manner of the first aspect, when the QoS control indication is a newly defined HTML tag:
the newly defined HTML tag includes a preset bandwidth and/or delay, and when data transmission is less than the preset bandwidth and/or the data transmission is greater than the preset delay, the terminal sends a request to the QoS control function entity of the operator, so that the data transmission satisfies the preset bandwidth and/or delay.

With reference to the first possible implementation manner of the first aspect, in a fourth possible implementation manner of the first aspect, when the QoS control indication is an HTML tag of a newly added attribute, specifically:
the HTML tag of the newly added attribute includes a preset bandwidth, and when data transmission is less than the preset bandwidth, the terminal sends a request to the QoS control function entity of the operator, so that the data transmission satisfies the preset bandwidth.

With reference to the first aspect, the first possible implementation manner of the first aspect, the second possible implementation manner of the first aspect, the third possible implementation manner of the first aspect, or the fourth possible implementation manner of the first aspect, in a fifth possible implementation manner of the first aspect, the method further includes:
inserting, by the application server, an application server certificate into the HTML page;
carrying, by the terminal, the application server certificate when sending the request to the QoS control function entity of the operator; and determining, by the QoS control function entity by using the application server certificate, that the QoS control is triggered by an application and charging the application.

According to a second aspect, a quality of service control method includes:
parsing, by a terminal, a QoS control indication on an HTML page, and requesting QoS control from a QoS control function entity of an operator; and
receiving a request result returned by the QoS control function entity, and performing processing according to the request result.

With reference to the second aspect, in a first possible implementation manner of the second aspect, the parsing, by a terminal, a QoS control indication on an HTML page, and requesting QoS control from a QoS control function entity of an operator includes:
parsing, by the terminal, the QoS control indication on the HTML page, invoking a plug-in of browser installed in the terminal, and sending a QoS control request to the QoS control function entity of the operator by using the plug-in of browser.

With reference to the second aspect, in a second possible implementation manner of the second aspect, the parsing, by a terminal, a QoS control indication on an HTML page, and requesting QoS control from a QoS control function entity of an operator includes:
parsing, by the terminal, the QoS control indication on the HTML page, invoking an application programming interface API from a universal capability open platform, and sending a QoS control request to the QoS control function entity of the operator by using the universal capability open platform.

With reference to the second aspect, the first possible implementation manner of the second aspect, or the second possible implementation manner of the second aspect, in a third possible implementation manner of the second aspect, the method further includes:
before the sending, by the terminal, a QoS control request to the QoS control function entity of the operator, determining, according to preconfigured information, whether it is needed to prompt a user to send the QoS control request, or determining, according to a result of interaction between a plug-in of browser of a network operator and the QoS control function entity of the operator or between the universal capability open platform and the QoS control function entity of the operator, whether it is needed to prompt a user to send the QoS control request, where:
   the prompting the user to send the QoS control request includes that:
      a prompt window is displayed, or prompt information is added in an existing window.

According to a third aspect, an application server includes:
an inserting unit, configured to insert a quality of service QoS control indication into a Hypertext Markup Language HTML page; and
a receiving unit, configured to receive an HTML page request of a terminal, and return the HTML page including the QoS quality of service QoS control indication to the terminal, so that the terminal requests QoS control from a QoS control function entity of an operator according to the QoS control indication on the HTML page, where the QoS control includes QoS status query and/or QoS improvement.

With reference to the third aspect, in a first possible implementation manner of the third aspect, the QoS control indication is a java script, a newly defined HTML tag, or an HTML tag of a newly added attribute.

With reference to the first possible implementation manner of the third aspect, in a second possible implementation manner of the third aspect, the inserting unit is specifically configured to:
insert a java script into the HTML page, where the java script requires the terminal to invoke a QoS query API, and if a returned value of the QoS query API is greater than a preset delay value, the terminal invokes a QoS request API to request that the QoS be less than the preset time value.

With reference to the first possible implementation manner of the third aspect, in a third possible implementation manner of the third aspect, the inserting unit is specifically configured to:
insert a newly defined HTML tag into the HTML page, where the newly defined HTML tag includes a preset bandwidth and/or delay, and when data transmission is less than the preset bandwidth and/or the data transmission is greater than the preset delay, the terminal sends a request to the QoS control function entity of the operator, so that the data transmission satisfies the preset bandwidth and/or delay.

With reference to the first possible implementation manner of the third aspect, in a fourth possible implementation manner of the third aspect, the inserting unit is specifically configured to:
insert an HTML tag of a newly added attribute into the HTML page, where the newly added attribute includes a preset bandwidth, and when data transmission is less than the preset bandwidth, the terminal sends a request to the QoS control function entity of the operator, so that the data transmission satisfies the preset bandwidth.

With reference to the third aspect, the first possible implementation manner of the third aspect, the second possible implementation manner of the third aspect, the third possible implementation manner of the third aspect, or the fourth possible implementation manner of the third aspect, in a fifth possible implementation manner of the third aspect, the application server further includes:
an inserting subunit, configured to insert an application server certificate into the HTML page, where when the received HTML page request of the terminal has the application server certificate, the QoS control function entity determines, by using the application server certificate, that the QoS control is triggered by an application and charges the application.

According to a fourth aspect, a terminal includes:
a parsing unit, configured to parse a QoS control indication on an HTML page;
a sending unit, configured to request QoS control from a QoS control function entity of an operator; and
a presenting unit, configured to perform processing according to a request result returned by the QoS control function entity.

With reference to the fourth aspect, in a first possible implementation manner of the fourth aspect, the parsing unit is specifically configured to:
parse the QoS control indication on the HTML page, invoke a plug-in of browser installed in the terminal, and send a QoS control request to the QoS control function entity of the operator by using the plug-in of browser, where the plug-in of browser is provided by an operator to which the terminal belongs.

With reference to the fourth aspect, in a second possible implementation manner of the fourth aspect, the parsing unit is specifically configured to:
parse the QoS control indication on the HTML page, invoke an application programming interface API from a universal capability open platform, and send a QoS control request to the QoS control function entity of the operator by using the universal capability open platform.

With reference to the fourth aspect, the first possible implementation manner of the fourth aspect or the second possible implementation manner of the fourth aspect, in a third possible implementation manner of the fourth aspect, the terminal further includes:
a prompting unit, configured to: before the terminal sends the QoS control request to the QoS control function entity of the operator, determine, according to preconfigured information, whether it is needed to prompt a user to send the QoS control request, or determine, according to a result of interaction between a plug-in of browser of a network operator and the QoS control function entity of the operator or between the universal capability open platform and the QoS control function entity of the operator, whether it is needed to prompt a user to send the QoS control request, where:
   the prompting the user to send the QoS control request includes that:
      a prompt window is displayed, or prompt information is added in an existing window.

### Beneficial Effects of the Invention

### Beneficial Effects

Compared with the prior art, the embodiments of the present invention disclose a quality of service control method. In the method, an application server inserts a QoS control indication into an HTML page, so that a terminal parses the QoS control indication on the HTML page, and requests QoS control from a QoS control function entity of an operator. Therefore, for a QoS control capability, interaction between the application server and a network operator is changed to interaction between the terminal and the network operator, and interaction between the application server and a corresponding QoS control function entity of the network operator is not needed, thereby simplifying processing of the application server. In addition, the QoS control function entity of the network operator needs to interact only with a plug-in installed in a terminal browser by the network operator or with a universal capability open platform, and interaction with different application servers is prevented, thereby also simplifying implementation of the QoS control function entity and solving a problem of capability open fragmentation.

### BRIEF DESCRIPTION OF DRAWINGS

To describe the technical solutions in the embodiments of the present invention more clearly, the following briefly introduces the accompanying drawings required for describing the embodiments. Apparently, the accompanying drawings in the following description show merely some embodiments of the present invention, and a person of ordinary skill in the art may still derive other drawings from these accompanying drawings without creative efforts.
FIG. 1 is a flowchart of a quality of service control method according to Embodiment 1 of the present invention;
FIG. 2 is a schematic diagram of a quality of service control method according to an embodiment of the present invention;
FIG. 3 is a schematic diagram of a quality of service control method according to an embodiment of the present invention;
FIG. 4 is a schematic diagram of a quality of service control method according to an embodiment of the present invention;
FIG. 5 is a flowchart of a quality of service control method according to Embodiment 2 of the present invention;
FIG. 6 is an apparatus structural diagram of an application server according to Embodiment 3 of the present invention;
FIG. 7 is an apparatus structural diagram of a terminal according to Embodiment 4 of the present invention;
FIG. 8 is an apparatus structural diagram of an application server according to Embodiment 5 of the present invention; and
FIG. 9 is an apparatus structural diagram of a terminal according to Embodiment 6 of the present invention.

### DESCRIPTION OF EMBODIMENTS

### Implementation Manners of the Present Invention

To make the objectives, technical solutions, and advantages of the present invention clearer and more comprehensible, the following further describes the present invention in detail with reference to the accompanying drawings and embodiments. It should be understood that the specific embodiments described herein are merely used to explain the present invention but not intended to limit the present invention.

The foregoing embodiments are merely exemplary embodiments of the present invention, but are not intended to limit the present invention. Any modification, equivalent replacement, or improvement made without departing from the spirit and principle of the present invention shall fall within the scope of the present invention.

### Embodiment 1

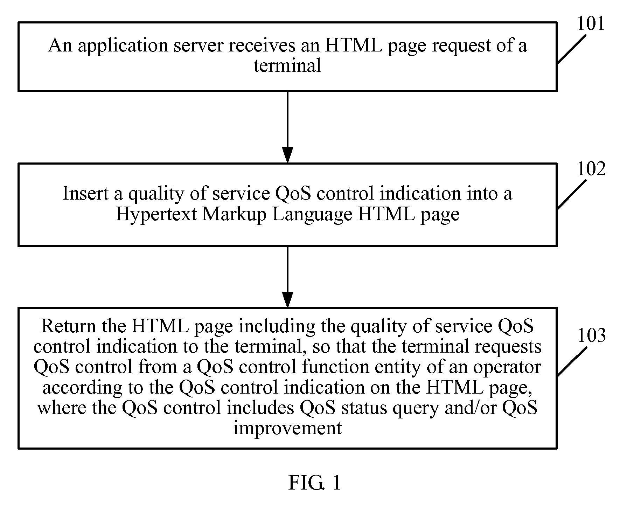

Referring to FIG. 1, FIG. 1 is a flowchart of a quality of service control method according to Embodiment 1 of the present invention. As shown in FIG. 1, the method includes the following steps:
Step 101: An application server receives an HTML page request of a terminal.
Step 102: Insert a quality of service QoS control indication into a Hypertext Markup Language HTML page.

The QoS control indication is a java script, a newly defined HTML tag, or an HTML tag of a newly added attribute.

Optionally, that the application server inserts a QoS control indication into an HTML page, where the QoS control indication is a java script, is specifically:
inserting, by the application server, the java script into the HTML page, where the java script requires the terminal to invoke a QoS query API, and if a returned value of the QoS query API is greater than a preset delay value, a QoS request API is invoked to request that the QoS be less than the preset time value.

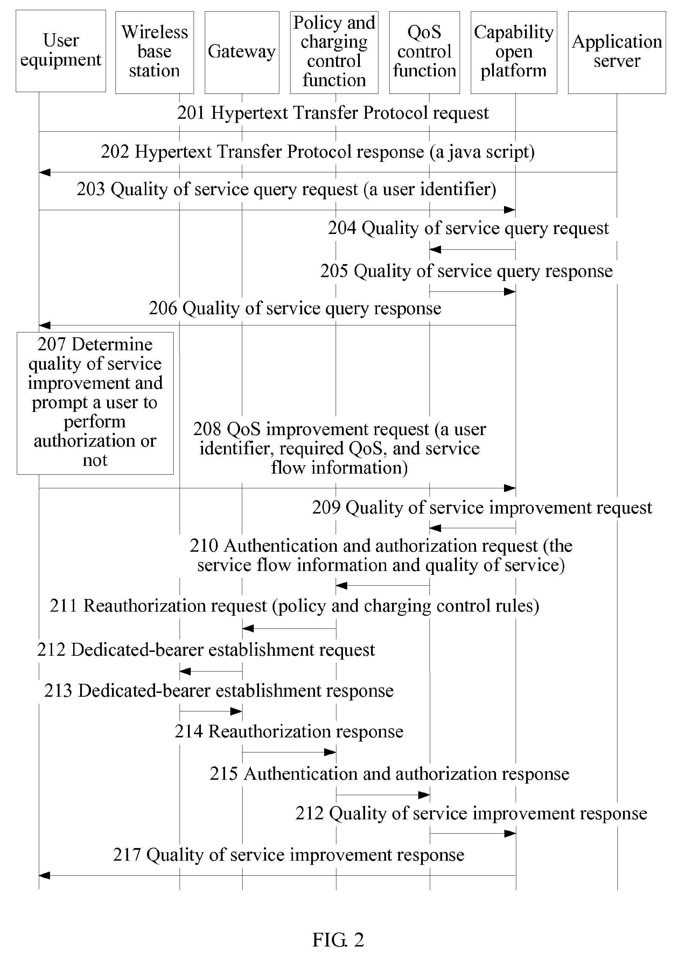

Specifically, referring to step 202 in FIG. 2, an online game website has a specific requirement for a transmission delay, and the application server inserts the following java script into the HTML page:
Navigator. QoScontrol. getCurrentQoS(QoS information);
if QoS information.delay > 100ms,
then Navigator.QoScontrol.UpdatetQoS(100ms);

A meaning of the script is that a browser is first required to invoke the QoS query API, and if the delay of the returned value of the QoS query API is greater than 100 ms, the QoS request API is invoked to request that a network transmission delay be less than 100 ms.

Optionally, that the application server inserts a QoS control indication into an HTML page, where the QoS control indication is a newly defined HTML tag, is specifically:
inserting, by the application server, the newly defined HTML tag into the HTML page, where the newly defined HTML tag includes a preset bandwidth and/or delay, and when data transmission is less than the preset bandwidth and/or the data transmission is greater than the preset delay, the terminal sends a request to a QoS control function entity of an operator, so that the data transmission satisfies the preset bandwidth and/or delay.

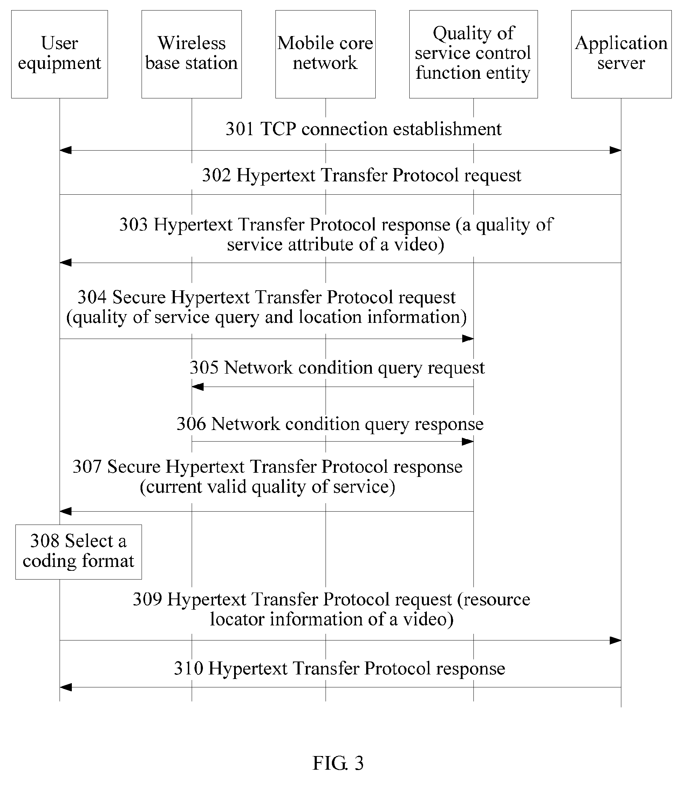

Specifically, referring to step 303 in FIG. 3, video files with different resolutions of a same movie that are provided by a video website correspond to high definition, standard definition and the like separately, and the HTML page returned by the application server includes the following content:
<video id="movie" >
<source src="XXX.mp4" type='video/mp4; bandwidth required = 512Kbit/s />
<source src="YYY.mp4" type='video/mp4; bandwidth required =1Mbits/s/>
</video>

The source src part indicates the video files with different resolutions. For example, "XXX.mp4" type indicates a standard definition file, and "YYY.mp4" type indicates a high definition file. The bandwidth required part indicates minimum bandwidths required by the video files with different resolutions, which may be implemented in a manner of adding an attribute in an existing HTML tag (video).

Optionally, that the application server inserts a QoS control indication into an HTML page, where the QoS control indication is an HTML tag of a newly added attribute, is specifically:
inserting, by the application server, the HTML tag of the newly added attribute into the HTML page, where the newly added attribute includes a preset bandwidth, and when data transmission is less than the preset bandwidth, the terminal sends a request to the QoS control function entity of the operator, so that the data transmission satisfies the preset bandwidth.

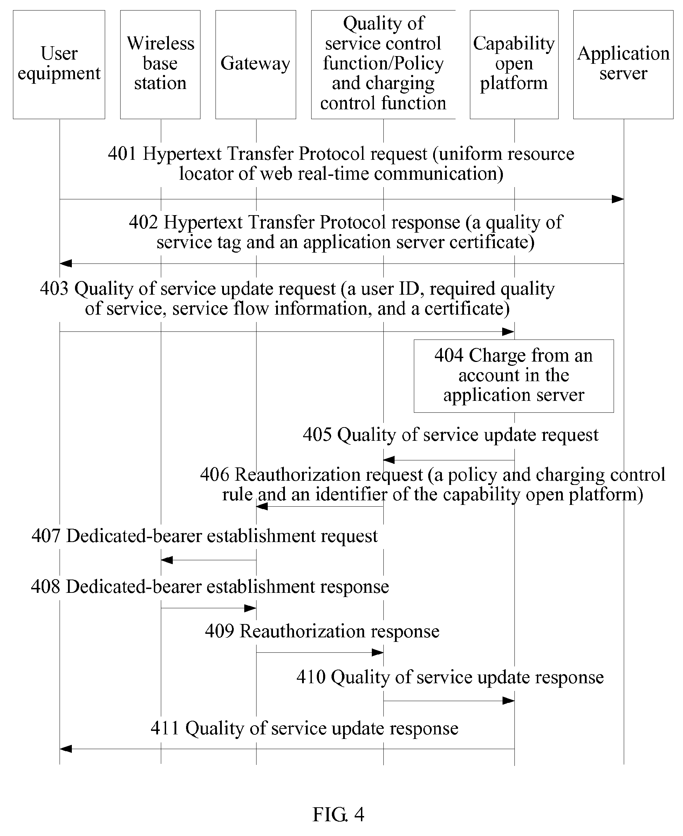

Specifically, referring to step 402 in FIG. 4, because communication has a specific requirement for a transmission delay and bandwidth, a newly added QoS tag may be inserted into the HTML page:
<QoS >
<guaranteed bandwidth = 512Kbit/s />
< guaranteed delay <= 100ms>
</QoS>

The guaranteed bandwidth part indicates the requirement for the transmission bandwidth, and the guaranteed delay part indicates the requirement for the transmission delay.

As another optional embodiment, the method further includes:
inserting, by the application server, an application server certificate into the HTML page;
carrying, by the terminal, the application server certificate when sending the request to the QoS control function entity of the operator; and determining, by the QoS control function entity by using the application server certificate, that the QoS control is triggered by an application and charging the application.

Specifically, referring to step 403 and step 404 in FIG. 4, the terminal parses the HTML page; after discovering the newly added QoS tag, a QoS improvement API from a universal capability open platform is invoked, where application certificate information is further included in addition to a user identifier, a QoS demand, and a service flow identifier. The universal capability open platform deducts a fee from a corresponding account in the application server according to the application certificate information, where the account, for example, credit card information provided by the application server, may be provided to the universal capability open platform by the application server in advance.

Step 103: Return the HTML page including the quality of service QoS control indication to the terminal, so that the terminal requests QoS control from the QoS control function entity of the operator according to the QoS control indication on the HTML page, where the QoS control includes QoS status query and/or QoS improvement.

This embodiment of the present invention discloses a quality of service control method. In the method, an application server inserts a QoS control indication into an HTML page, so that a terminal parses the QoS control indication on the HTML page, and requests QoS control from a QoS control function entity of an operator. Therefore, for a QoS control capability, interaction between the application server and a network operator is changed to interaction between the terminal and the network operator, and interaction between the application server and a corresponding network QoS control function entity of the operator is not needed, thereby simplifying processing of the application server. In addition, the QoS control function entity of the network operator needs to interact only with a plug-in of browser installed in the terminal by the network operator or with a universal capability open platform, and interaction with different application servers is prevented, thereby also simplifying implementation of the QoS control function entity and solving a problem of capability open fragmentation.

### Embodiment 2

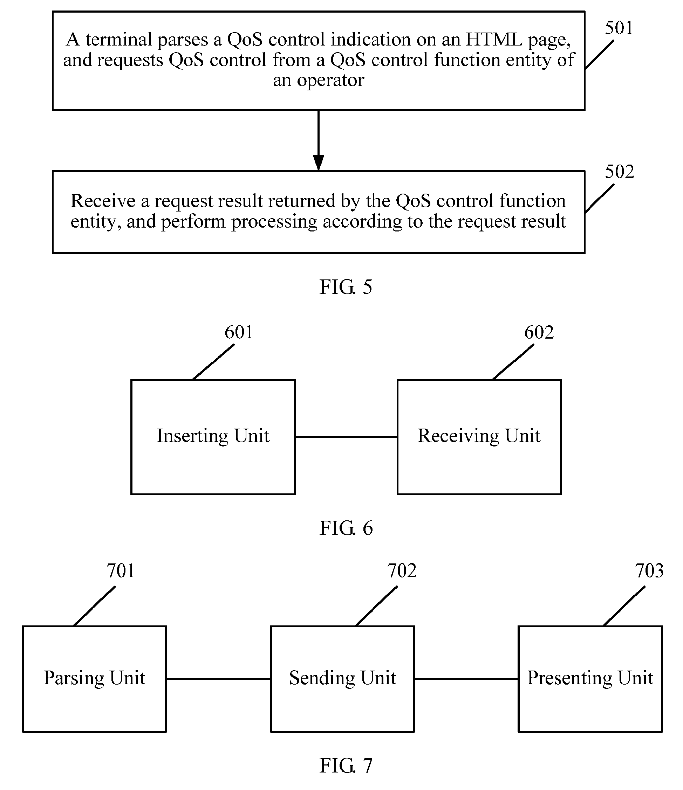

Referring to FIG. 5, FIG. 5 is a flowchart of a quality of service control method according to Embodiment 2 of the present invention. As shown in FIG. 5, the method includes the following steps:
Step 501: A terminal parses a QoS control indication on an HTML page, and requests QoS control from a QoS control function entity of an operator.

Optionally, that a terminal parses a QoS control indication on an HTML page, and requests QoS control from a QoS control function entity of an operator includes:
parsing, by the terminal, the QoS control indication on the HTML page, invoking a plug-in of browser installed in the terminal, and sending a QoS control request to the QoS control function entity of the operator by using the plug-in of browser, where the plug-in of browser is provided by an operator to which the terminal belongs.

Specifically, referring to step 304 in FIG. 3, the terminal parses a tag on the HTML page; after discovering the QoS control indication on the HTML page, the terminal invokes the plug-in of browser installed in the terminal. The plug-in of browser sends a QoS query message to a QoS control function entity of a network operator or invokes a QoS query application programming interface (Application Programming Interface, API), where the QoS query message or invoking of the QoS query API may be carried in the HTTPS to ensure security.

Optionally, that a terminal parses a QoS control indication on an HTML page, and requests QoS control from a QoS control function entity of an operator includes:
parsing, by the terminal, the QoS control indication on the HTML page, invoking an application programming interface API from a universal capability open platform, and sending a QoS control request to the QoS control function entity of the operator by using the universal capability open platform.

Specifically, referring to step 203 in FIG. 2, the terminal parses a java script on the HTML page; after discovering the QoS control indication on the HTML page, the terminal directly invokes a QoS query API from the universal capability open platform to query a current network transmission delay. The universal capability open platform may be bound to the terminal. For example, an IE browser of Microsoft may invoke the QoS query API from a capability open platform of Microsoft, and a chrome browser of Google may invoke the QoS query API from a capability open platform of Google. The capability open platform may also not be related to a browser and is provided by a third party, and any browser can invoke the QoS query API from the capability open platform. Regardless of whether the capability open platform is bound to the terminal, when invoking the QoS query API from the capability open platform, the terminal needs to consider a network operator to which a terminal user belongs.

As an optional embodiment, the method further includes:
before the sending, by the terminal, a QoS control request to the QoS control function entity of the operator, determining, according to preconfigured information, whether it is needed to prompt a user to send the QoS control request, or determining, according to a result of interaction between a plug-in of browser of a network operator and the QoS control function entity of the operator or between the universal capability open platform and the QoS control function entity of the operator, whether it is needed to prompt a user to send the QoS control request, where:
   the prompting the user to send the QoS control request includes that:
      a prompt window is displayed, or prompt information is added in an existing window.

Specifically, referring to step 207 in FIG. 2, when a transmission delay is greater than 100 ms, a demand of an online game is not met; therefore, a QoS improvement API needs to be invoked according to a determining logic of a script. Because more wireless resources may need to be reserved for the QoS improvement API, the network operator charges for this API. Prompt information may be displayed for the user before the terminal invokes the API, and the terminal invokes the QoS improvement API only after the user makes confirmation. Specific manners for prompting the user include that the prompt window is displayed, or the prompt information is added in the existing window.

In addition, the terminal may configure QoS control APIs for which the user needs to be prompted. For example, for the QoS query API, the user does not need to be prompted; or the terminal may also directly invoke the QoS improvement API from the capability open platform. After discovering that the QoS improvement needs an additional fee, the universal capability open platform may instruct, in a response message of the QoS improvement API, a browser to prompt the user, and request the QoS improvement API again after the user makes confirmation.

Step 502: Receive a request result returned by the QoS control function entity, and perform processing according to the request result.

For example, the terminal presents a service related to the QoS control to the user according to the request result returned by the QoS control function entity.

This embodiment of the present invention discloses a quality of service control method. In the method, an application server inserts a QoS control indication into an HTML page, so that a terminal parses the QoS control indication on the HTML page, and requests QoS control from a QoS control function entity of an operator. Therefore, for a QoS control capability, interaction between the application server and a network operator is changed to interaction between the terminal and the network operator, and interaction between the application server and a Corresponding QoS control function entity of the network operator is not needed, thereby simplifying processing of the application server. In addition, the QoS control function entity of the network operator needs to interact only with a plug-in installed in a terminal browser by the network operator or with a universal capability open platform, and interaction with different application servers is prevented, thereby also simplifying implementation of the QoS control function entity and solving a problem of capability open fragmentation.

A method of interaction between the application server and the terminal in Embodiment 1 and Embodiment 2 is further described in the following by using FIG. 2, FIG. 3, and FIG. 4 as examples. A sequence of steps in FIG. 2, FIG. 3, and FIG. 4 is not limited, and only one manner thereof is used as an example for description.

Referring to FIG. 2, FIG. 2 is a schematic diagram of a quality of service control method according to an embodiment of the present invention.

In this embodiment, an application server provides an online game service. Because an online game has a high requirement for a delay, a current network delay of the service needs to be queried. After the delay cannot meet a demand of the service, a QoS improvement API needs to be invoked to reduce a network transmission delay, so as to meet the demand of the service. As shown in FIG. 2:
Step 201: A terminal sends an HTTP request to the application server to request a page of the online game.
Step 202: Because an online game website has a specific requirement for the transmission delay in this example, the application server may insert the following script into an HTML page:
   Navigator. QoS control. getCurrentQoS(QoS information);
   if QoS information.delay > 100ms,
   then Navigator.QoScontrol.UpdatetQoS(100ms);

   A meaning of the script is that a browser is first required to invoke a QoS query API, and if a delay of a returned value of the QoS query API is greater than 100 ms, a QoS request API is invoked to request that the network transmission delay be less than 100 ms.
Step 203: The terminal parses the java script on the HTML page; after discovering the foregoing statements, the terminal first invokes the QoS query API to query a current network transmission delay. A browser directly invokes the QoS query API from a universal capability open platform, and the universal capability open platform may be bound to the browser. For example, an IE browser of Microsoft may invoke the QoS query API from a capability open platform of Microsoft, and a chrome browser of Google may invoke the QoS query API from a capability open platform of Google. The capability open platform may also not be related to a browser and is provided by a third party, and any browser can invoke the QoS query API from the capability open platform. Regardless of whether the capability open platform is bound to the browser, when invoking the QoS query API from the capability open platform, the browser does not need to consider a network operator to which a user belongs.
Step 204: The universal capability open platform determines, according to a user ID included in the QoS query API, such as a telephone number, the network operator to which the user belongs, and sends a QoS query request message or the QoS query API to a QoS control entity of the operator.
Step 205: The QoS control entity of the network operator returns a current QoS status of the user.
Step 206: The capability open platform returns the current QoS status to the browser.
Step 207: For this embodiment, a current transmission delay is greater than 100 ms, and a demand of the online game is not met; therefore, a QoS improvement API needs to be invoked according to a determining logic of the script. Because more wireless resources may need to be reserved for the QoS improvement API, the network operator charges for this API. Prompt information may be displayed for the user before the browser invokes the API, and the browser invokes the QoS improvement API only after the user makes confirmation. Specific manners for prompting the user include that a prompt window is displayed, or the prompt information is added in an existing window.
   In addition, the browser may configure QoS control APIs for which the user needs to be prompted. For example, for the QoS query API, the user does not need to be prompted; the browser may also directly invoke the QoS improvement API from the capability open platform. After discovering that the QoS improvement needs an additional fee, the universal capability open platform may instruct, in a response message of the QoS improvement API, the browser to prompt the user, and requests the QoS improvement API again after the user makes confirmation.
Step 208: The browser invokes the QoS improvement API from the universal capability open platform, where the user ID, QoS required by a service is included, that is, the delay is less than 100 ms in this example, and information of a service flow, the service flow indicates the online game service, and a specific format may be an IP quintuple.
Step 209: The universal capability open platform determines, according to the user ID included in the QoS improvement API, the network operator to which the user belongs, and sends a QoS improvement request message or the QoS improvement API to the QoS control function entity of the operator.
Step 210: Because the QoS control function entity of the network operator is an independent network element in this example, the independent functional network element may instruct, by using an Rx interface that has already been defined in an existing standard, a PCRF to meet a QoS demand of the service flow.
Step 211: The PCRF generates a service-based policy, and delivers the policy to an SAE gateway.
Step 212: The SAE gateway triggers a dedicated bearer establishment or modification procedure, and instructs a wireless base station to reserve a wireless resource for the bearer, so as to ensure QoS of the service.
Step 213: The dedicated bearer establishment or modification procedure is completed.
Step 214: The SAE gateway returns a confirmation message to the PCRF.
Step 215: The PCRF returns the confirmation message to the independent QoS control function entity.
Step 216: The QoS control function entity returns a QoS improvement result to the universal capability open platform.
Step 217: The universal capability open platform returns the QoS improvement result to the browser, and the browser interacts with the application server to provide the online game. Because the delay is already less than 100 ms by means of the QoS improvement, the user can smoothly play the online game.

It can be seen from this embodiment that, for an application server, only unified JAVA script statements need to be inserted into an existing tag, and interaction between the application server and a Corresponding QoS control function entity of the network operator is not needed, thereby simplifying processing of the application server. For the QoS control function entity of the network operator, only interaction with a universal capability open platform is needed, and separate interaction with each application server is not needed, thereby also simplifying implementation of the QoS control function entity. For a browser, only interaction with the universal capability open platform is needed, and the capability open platform is responsible for selecting the corresponding network operator and completing a related QoS control operation.

Referring to FIG. 3, FIG. 3 is a schematic diagram of a quality of service control method according to an embodiment of the present invention.

In this embodiment, an application server provides a WEB video on demand service. An application server has video files with various resolutions, such as high definition, and standard definition. Different resolutions have different requirements for a network bandwidth, and a lower definition has a lower requirement for the network bandwidth.

As shown in FIG. 3, the method includes the following steps:
Step 301: Establish a Transmission Control Protocol (Transmission Control Protocol, TCP) connection between a terminal and the application server.
Step 302: The terminal sends a Hypertext Transfer Protocol (Hypertext Tranfer Progocol, HTTP) request to request a page of a video website.
Step 303: Because video files with different resolutions of a same movie that are provided by the video website correspond to high definition, standard definition and the like in this example, the application server returns an HTML page that includes the following content:
   <video id="movie" >
   <source src="XXX.mp4" type='video/mp4; bandwidth required = 512Kbit/s />
   <source src="YYY.mp4" type='video/mp4; bandwidth required =1Mbits/s/>
   </video>

   The source src part indicates the video files with different definitions. For example, "XXX.mp4" type indicates a standard definition file, and "YYY.mp4" type indicates a high definition file. The bandwidth required part indicates minimum bandwidths required by the video files with different resolutions, which is implemented in a manner of adding an attribute in an existing HTML tag (video) in this embodiment.
Step 304: A browser parses a tag on the HTML page; after discovering the newly added attribute, the browser invokes a plug-in of browser installed in the terminal; the plug-in of browser sends a QoS query message to a QoS control function entity of a network operator or invokes a QoS query API, where the QoS query message or the QoS query API may be carried in the HTTPS to ensure security. Optionally, the query message may include information about a current location of the terminal, for example, information about a wireless cell where the terminal is currently located. It should be noted that the plug-in of browser herein is installed by a network operator to which a terminal user belongs. For example, a terminal user A belongs to a mobile operator X, then a plug-in of browser of the mobile operator X is installed, and the plug-in is responsible for interacting with a QoS control function entity of the network operator X. Similarly, a terminal user B belongs to a mobile operator Y, then a plug-in of browser of the mobile operator Y is installed, and the plug-in is responsible for interacting with a QoS control function entity of the network operator Y.
Step 305: The QoS control function entity of the network operator queries information about a current QoS status of a user from a corresponding wireless base station according to the location information in the message after receiving the QoS query message or receiving the invoking of the QoS query API.
   Meanwhile, the QoS control function entity may be an independent capability open platform of the network operator, and may also be a policy and charging rules function (Policy and charging rules function, PCRF) network element defined in an existing standard.
Step 306: The wireless base station returns the current QoS status of the user according to current use of a wireless resource, where the current QoS status includes an available maximum bandwidth, a current maximum transmission delay, whether the network is congested currently and the like.
Step 307: The QoS control function entity returns currently available QoS information to the plug-in of browser.
Step 308: The browser obtains the information about the available QoS according to the plug-in of browser, and selects a video file with an appropriate resolution. In this example, a maximum bandwidth available for the user returned by the QoS control function entity is 600 Kbits/s, and the browser selects to download the XXX.mp4 video file (corresponding to a standard definition video) according to this result and presents it to the user.
Step 309: The browser sends a second HTTP request to the application server to download the standard definition video file.
Step 310: The application server returns the corresponding video file.

It can be seen from this embodiment that, for an application server, only a unified newly added attribute needs to be inserted into an existing tag to trigger a browser to invoke a related QoS control operation, a network operator to which a user belongs does not need to be considered, and interaction between the application server and a Corresponding QoS control function entity of the network operator is not needed, thereby simplifying processing of the application server. In addition, the QoS control function entity of the network operator needs to interact only with a plug-in of browser installed in a user terminal by the network operator, and interaction with different application servers is prevented, thereby also simplifying implementation of the QoS control function entity. In this case, the problem of capability open fragmentation is solved in the prior art.

Referring to FIG. 4, FIG. 4 is a schematic diagram of a quality of service control method according to an embodiment of the present invention. Similar to FIG. 2, in FIG. 4, QoS improvement needs to be requested from a network; a difference from FIG. 2 lies in that in this embodiment, a QoS improvement API is paid by an application server rather than a user.

Step 401: A terminal sends an HTTP request to request a WEB-based real-time communication service, for example, a video chat service.

Step 402: Because implementation of communication has a specific requirement for a transmission delay and bandwidth in this example, the application server may insert a newly added QoS tag into an HTML page.
<QoS >
<guaranteed bandwidth = 512Kbit/s />
< guaranteed delay <= 100ms>
</QoS>

Because an application pays for the QoS demand in this embodiment, information, such as an application certificate, may be inserted into the HTML page to identify the application.

Step 403: A browser parses the HTML page; after discovering the QoS tag, the browser invokes the QoS improvement API from a universal capability open platform, where the QoS improvement API further includes application certificate information in addition to a user identifier, the QoS demand, and a service flow identifier.

Step 404: The universal capability open platform deducts a fee from a corresponding account in the application server according to the application certificate information, where the account, for example, credit card information provided by the application server, may be provided to the universal capability open platform by the application server in advance.

Step 405: The universal capability open platform determines, according to the user ID included in the QoS improvement API, a network operator to which the user belongs, and sends a QoS improvement request message or the QoS improvement API to a QoS control function entity of the operator. It should be noted that the QoS control function entity is integrated into a PCRF of an existing mobile network in this embodiment, and interaction between the universal capability open platform and the QoS control function entity may be implemented by using an Rx interface that has already been defined in a standard, and may also be implemented by using an open API of the QoS control function entity.

Step 406: The QoS control function entity generates a policy and charging control (Policy and charging control, PCC) rule, where the message also includes a charging ID of the universal capability open platform.

Step 407: A gateway executes a policy, and triggers dedicated bearer establishment.

Step 408: A dedicated bearer is established successfully.

Step 409: The gateway returns a response message to the QoS control function entity; at the same time, the gateway interacts with a charging system of a mobile network operator to charge the service flow. In the interaction process, the gateway forwards, to the charging system, the charging ID of the universal capability open platform delivered by the QoS control function entity, and the mobile network operator deducts a fee from the account of the universal capability open platform.

Step 410: The QoS control function entity returns a QoS improvement confirmation message to the capability open platform.

Step 411: The universal capability open platform returns the QoS improvement result to the browser, and the browser interacts with the application server to provide the WEB-based real-time communication service. Because the bandwidth and the delay are ensured, the user has a good service experience.

In this embodiment, the universal capability open platform is not only used to select the QoS control function entity corresponding to the network operator, but also functions as a charging proxy: on one hand, the universal capability open platform pays to the network operator; on the other hand, the universal capability open platform charges a specific application in the application server.

This embodiment of the present invention discloses a quality of service control method. In the method, an application server inserts a QoS control indication into an HTML page, so that a terminal parses the QoS control indication on the HTML page, and requests QoS control from a QoS control function entity of an operator. Therefore, for a QoS control capability, interaction between the application server and a network operator is changed to interaction between the terminal and the network operator, and interaction between the application server and a Corresponding QoS control function entity of the network operator is not needed, thereby simplifying processing of the application server. In addition, the QoS control function entity of the network operator needs to interact only with a plug-in installed in a terminal browser by the network operator or with a universal capability open platform, and interaction with different application servers is prevented, thereby also simplifying implementation of the QoS control function entity and solving a problem of capability open fragmentation.

### Embodiment 3

Referring to FIG. 6, FIG. 6 is an apparatus structural diagram of an application server according to Embodiment 3 of the present invention. As shown in FIG. 6, the application server includes the following units: an inserting unit 601, and a receiving unit 602.

The inserting unit 601 is configured to insert a quality of service QoS control indication into a Hypertext Markup Language HTML page.

The QoS control indication is a java script, a newly defined HTML tag, or an HTML tag of a newly added attribute.

Optionally, the inserting unit 601 is specifically configured to:
insert a java script into the HTML page, where the java script requires a terminal to invoke a QoS query API, and if a returned value of the QoS query API is greater than a preset time value, the terminal invokes the QoS query API to request that the QoS be less than the preset time value.

Specifically, referring to step 202 in FIG. 2, an online game website has a specific requirement for a transmission delay, and the application server inserts the following java script into the HTML page:
Navigator. Qo S control. getCurrentQo S (Qo S information);
if QoS information.delay > 100ms,
then Navigator.QoScontrol.UpdatetQoS(100ms);

A meaning of the script is that a browser is first required to invoke the QoS query API, and if the delay of the returned value of the QoS query API is greater than 100 ms, the QoS request API is invoked to request that a network transmission delay be less than 100 ms.

Optionally, the inserting unit 601 is specifically configured to:
insert a newly defined HTML tag into the HTML page, where the newly defined HTML tag includes a preset bandwidth and/or delay, and when data transmission is less than the preset bandwidth and/or the data transmission is greater than the preset delay, the terminal sends a request to a QoS control function entity of an operator, so that the data transmission satisfies the preset bandwidth and/or delay.

Specifically, referring to step 303 in FIG. 3, video files with different resolutions of a same movie that are provided by a video website correspond to high definition, standard definition and the like separately, and the HTML page returned by the application server includes the following content:
<video id="movie" >
<source src="XXX.mp4" type='video/mp4; bandwidth required = 512Kbit/s />
<source src="YYY.mp4" type='video/mp4; bandwidth required =1Mbits/s/>
</video>

The bandwidth required part indicates minimum bandwidths required by the video files with different resolutions, which may be implemented in a manner of adding an attribute in an existing HTML tag (video).

Optionally, the inserting unit 601 is specifically configured to:
insert an HTML tag of a newly added attribute into the HTML page, where the newly added attribute includes a preset bandwidth, and when data transmission is less than the preset bandwidth, the terminal sends a request to a QoS control function entity of an operator, so that the data transmission satisfies the preset bandwidth.

Specifically, referring to step 402 in FIG. 4, because communication has a specific requirement for a transmission delay and bandwidth, the application server may insert a newly added QoS tag into the HTML page:
<QoS >
<guaranteed bandwidth = 512Kbit/s />
< guaranteed delay <= 100ms>
</QoS>

The guaranteed bandwidth part indicates the requirement for the transmission bandwidth, and the guaranteed delay part indicates the requirement for the transmission delay.

As an optional embodiment, the application server further includes:
an inserting subunit, configured to insert an application server certificate into the HTML page, where when the received HTML page request of the terminal has the application server certificate, the QoS control function entity determines, by using the application server certificate, that the QoS control is triggered by an application and charges the application.

Specifically, referring to step 403 and step 404 in FIG. 4, the terminal parses the HTML page; after discovering the newly added QoS tag, the terminal invokes a QoS improvement API from a universal capability open platform, where the QoS improvement API further includes application certificate information in addition to a user identifier, a QoS demand, and a service flow identifier. The universal capability open platform deducts a fee from a corresponding account in the application server according to the application certificate information, where the account, for example, credit card information provided by the application server, may be provided to the universal capability open platform by the application server in advance.

The receiving unit 602 is configured to receive the HTML page request of the terminal, and return the HTML page including the QoS quality of service QoS control indication to the terminal, so that the terminal requests QoS control from the QoS control function entity of the operator according to the QoS control indication on the HTML page, where the QoS control includes QoS status query and/or QoS improvement.

This embodiment of the present invention discloses an application server. The application server inserts a QoS control indication into an HTML page, so that a terminal parses the QoS control indication on the HTML page, and requests QoS control from a QoS control function entity of an operator. Therefore, for a QoS control capability, interaction between the application server and a network operator is changed to interaction between the terminal and the network operator, and interaction between the application server and a Corresponding QoS control function entity of the network operator is not needed, thereby simplifying processing of the application server. In addition, the QoS control function entity of the network operator needs to interact only with a plug-in installed in a terminal browser by the network operator or with a universal capability open platform, and interaction with different application servers is prevented, thereby also simplifying implementation of the QoS control function entity and solving a problem of capability open fragmentation.

### Embodiment 4

Referring to FIG. 7, FIG. 7 is an apparatus structural diagram of a terminal according to Embodiment 4 of the present invention. As shown in FIG. 7, the terminal includes the following units: a parsing unit 701, a sending unit 702, and a presenting unit 703.

The parsing unit 701 is configured to parse a QoS control indication on an HTML page.

The sending unit 702 is configured to request QoS control from a QoS control function entity of an operator.

Optionally, the parsing unit 701 is specifically configured to:
parse the QoS control indication on the HTML page, invoke a plug-in of browser installed in the terminal, and send a QoS control request to the QoS control function entity of the operator by using the plug-in of browser, where the plug-in of browser is provided by an operator to which the terminal belongs.

Specifically, referring to step 304 in FIG. 3, the terminal parses a tag on the HTML page; after discovering the QoS control indication on the HTML page, the terminal invokes the plug-in of browser installed in the terminal. The plug-in of browser sends a QoS query message to a QoS control function entity of a network operator or invokes a QoS query application programming interface (Application Programming Interface, API), where the QoS query message or invoking of the QoS query API may be carried in the HTTPS to ensure security.

Optionally, the parsing unit 701 is specifically configured to:
parse the QoS control indication on the HTML page, invoke an application programming interface API from a universal capability open platform, and send a QoS control request to the QoS control function entity of the operator by using the universal capability open platform.

Specifically, referring to step 203 in FIG. 2, the terminal parses a java script on the HTML page; after discovering the QoS control indication on the HTML page, the terminal directly invokes a QoS query API from the universal capability open platform to query a current network transmission delay. The universal capability open platform may be bound to the terminal. For example, an IE browser of Microsoft invokes the QoS query API from a capability open platform of Microsoft, and a chrome browser of Google invokes the QoS query API from a capability open platform of Google. The capability open platform may also not be related to a browser and is provided by a third party, and any browser can invoke the QoS query API from the capability open platform. Regardless of whether the capability open platform is bound to the terminal, when invoking the QoS query API from the capability open platform, the terminal needs to consider a network operator to which a terminal user belongs.

The presenting unit 703 is configured to perform processing according to a request result returned by the QoS control function entity.

As another optional embodiment, the terminal further includes:
a prompting unit, configured to: before the terminal sends the QoS control request to the QoS control function entity of the operator, determine, according to preconfigured information, whether it is needed to prompt a user to send the QoS control request, or determine, according to a result of interaction between a plug-in of browser of a network operator and the QoS control function entity of the operator or between the universal capability open platform and the QoS control function entity of the operator, whether it is needed to prompt a user to send the QoS control request, where:
   the prompting the user to send the QoS control request includes that:
      a prompt window is displayed, or prompt information is added in an existing window.

Specifically, referring to step 207 in FIG. 2, when a transmission delay is greater than 100 ms, a demand of an online game is not met; therefore, a QoS improvement API needs to be invoked according to a determining logic of the script. Because more wireless resources may need to be reserved for the QoS improvement API, the network operator charges for this API. Prompt information may be displayed for the user before the terminal invokes the API, and the terminal invokes the QoS improvement API only after the user makes confirmation. Specific manners for prompting the user include that the prompt window is displayed, or the prompt information is added in the existing window.

In addition, the terminal may configure QoS control APIs for which the user needs to be prompted. For example, for the QoS query API, the user does not need to be prompted; or the terminal may also directly invoke the QoS improvement API from the capability open platform. After discovering that the QoS improvement needs an additional fee, the universal capability open platform may instruct, in a response message of the QoS improvement API, the browser to prompt the user, and requests the QoS improvement API again after the user makes confirmation.

This embodiment of the present invention discloses a terminal. The terminal parses a QoS control indication that is inserted by an application server into an HTML page, and requests QoS control from a QoS control function entity of an operator. Therefore, for a QoS control capability, interaction between the application server and a network operator is changed to interaction between the terminal and the network operator, and interaction between the application server and a Corresponding QoS control function entity of the network operator is not needed, thereby simplifying processing of the application server. In addition, the QoS control function entity of the network operator needs to interact only with a plug-in installed in a terminal browser by the network operator or with a universal capability open platform, and interaction with different application servers is prevented, thereby also simplifying implementation of the QoS control function entity and solving a problem of capability open fragmentation.

### Embodiment 5

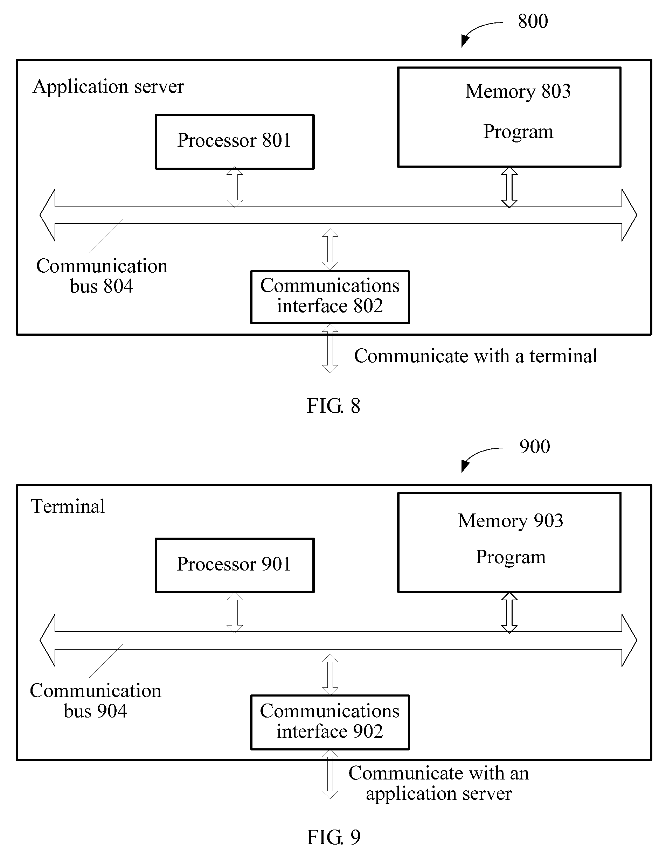

Referring to FIG. 8, FIG. 8 is an apparatus structural diagram of an application server according to Embodiment 5 of the present invention. Referring to FIG. 8, FIG. 8 shows an application server 800 according to this embodiment of the present invention. A specific implementation of the application server is not limited in the specific embodiment of the present invention. The application server 800 includes:
a processor (processor) 801, a communications interface (Communications Interface) 802, a memory (memory) 803, and a bus 804.

The processor 801, the communications interface 802, and the memory 803 communicate with each other by using the bus 804.

The communications interface 802 is configured to communicate with a terminal.

The processor 801 is configured to execute a program.

Specifically, the program may include program code, and the program code includes a computer operation instruction.

The processor 801 may be a central processing unit CPU, an application specific integrated circuit ASIC (Application Specific Integrated Circuit), or one or more integrated circuits configured to implement this embodiment of the present invention.

The memory 803 is configured to store the program. The memory 803 may include a high-speed RAM memory, and may also include a non-volatile memory (non-volatile memory). The program may be specifically configured to:
insert a quality of service QoS control indication into a Hypertext Markup Language HTML page; and
receive an HTML page request of the terminal, and return the HTML page including the quality of service QoS control indication to the terminal, so that the terminal requests QoS control from a QoS control function entity of an operator according to the QoS control indication on the HTML page, where the QoS control includes QoS status query and/or QoS improvement.

The QoS control indication is a java script, a newly defined HTML tag, or an HTML tag of a newly added attribute.

That an application server inserts a QoS control indication into an HTML page, where the QoS control indication is a java script, is specifically:
inserting, by the application server, a java script into the HTML page, where the java script requires the terminal to invoke a QoS query API, and if a delay of a returned value of the QoS query API is greater than a preset time value, the terminal invokes a QoS request API to request that the QoS be less than the preset time value.

When the QoS control indication is a newly defined HTML tag:
the newly defined HTML tag includes a preset bandwidth and/or delay, and when data transmission is less than the preset bandwidth and/or the data transmission is greater than the preset delay, the terminal sends a request to the QoS control function entity of the operator, so that the data transmission satisfies the preset bandwidth and/or delay.

When the QoS control indication is an HTML tag of a newly added attribute, specifically:
the HTML tag of the newly added attribute includes a preset bandwidth, and when data transmission is less than the preset bandwidth, the terminal sends a request to the QoS control function entity of the operator, so that the data transmission satisfies the preset bandwidth.

The method further includes:
inserting, by the application server, an application server certificate into the HTML page; when the received HTML page request of the terminal has the application server certificate, determining, by using the application server certificate, that the QoS control is triggered by an application and charging the application.

### Embodiment 6

Referring to FIG. 9, FIG. 9 is an apparatus structural diagram of a terminal according to Embodiment 6 of the present invention. Referring to FIG. 9, FIG. 9 shows a terminal 900 according to this embodiment of the present invention. A specific implementation of the terminal is not limited in the specific embodiment of the present invention. The terminal 900 includes:
a processor (processor) 901, a communications interface (Communications Interface) 902, a memory (memory) 903, and a bus 904.

The processor 901, the communications interface 902, and the memory 903 communicates with each other by using the bus 904.

The communications interface 902 is configured to communicate with an application server.

The processor 901 is configured to execute a program.

Specifically, the program may include program code, and the program code includes a computer operation instruction.

The processor 901 may be a central processing unit CPU, an application specific integrated circuit ASIC (Application Specific Integrated Circuit), or one or more integrated circuits configured to implement this embodiment of the present invention.

The memory 903 is configured to store the program. The memory 803 may include a high-speed RAM memory, and may also include a non-volatile memory (non-volatile memory). The program may be specifically configured to:
parse a QoS control indication on an HTML page, and request QoS control from a QoS control function entity of an operator; and
perform processing according to a request result returned by the QoS control function entity.

That a terminal parses a QoS control indication on an HTML page, and requests QoS control from a QoS control function entity of an operator includes:
parsing, by the terminal, the QoS control indication on the HTML page, and sending a QoS control request to the QoS control function entity of the operator by using a plug-in of browser, where the plug-in of browser is provided by an operator to which the terminal belongs.

That a terminal parses a QoS control indication on an HTML page, and requests QoS control from a QoS control function entity of an operator includes:
parsing, by the terminal, the QoS control indication on the HTML page, invoking an application programming interface API from a universal capability open platform, and sending a QoS control request to the QoS control function entity of the operator by using the universal capability open platform.

The method further includes:
before the sending a QoS control request to the QoS control function entity of the operator, determining, by the terminal according to preconfigured information, whether it is needed to prompt a user to send the QoS control request, or determining, according to a result of interaction between a plug-in of browser of a network operator and the QoS control function entity of the operator or between the universal capability open platform and the QoS control function entity of the operator, whether it is needed to prompt a user to send the QoS control request, where:
   the prompting the user to send the QoS control request includes that:
      a prompt window is displayed, or prompt information is added in an existing window.

The foregoing descriptions are merely exemplary implementation manners of the present invention, but are not intended to limit the protection scope of the present invention. Any modification, equivalent replacement, or improvement made without departing from the spirit and principle of the present invention shall fall within the protection scope of the present invention.

## Claims

1. A quality of service control method, wherein the method comprises:
receiving, by an application server, an HTML page request of a terminal;
inserting a quality of service QoS control indication into a Hypertext Markup Language HTML page; and
returning the HTML page comprising the quality of service QoS control indication to the terminal, so that the terminal requests QoS control from a QoS control function entity of an operator according to the QoS control indication on the HTML page, wherein the QoS control comprises QoS status query and/or QoS improvement.

2. The method according to claim 1, wherein the QoS control indication is a java script, a newly defined HTML tag, or an HTML tag of a newly added attribute.

3. The method according to claim 2, wherein when the QoS control indication is the java script:
the java script requires the terminal to invoke a QoS query API, and if a delay of a returned value of the QoS query API is greater than a preset time value, the terminal invokes a QoS request API to request that the QoS be less than the preset time value.

4. The method according to claim 2, wherein when the QoS control indication is a newly defined HTML tag:
the newly defined HTML tag comprises a preset bandwidth and/or delay, and when data transmission is less than the preset bandwidth and/or the data transmission is greater than the preset delay, the terminal sends a request to the QoS control function entity of the operator, so that the data transmission satisfies the preset bandwidth and/or delay.

5. The method according to claim 2, wherein when the QoS control indication is an HTML tag of a newly added attribute, specifically:
the HTML tag of the newly added attribute comprises a preset bandwidth, and when data transmission is less than a preset bandwidth, the terminal sends a request to the QoS control function entity of the operator, so that the data transmission satisfies the preset bandwidth.

6. The method according to any one of claims 1 to 5, wherein the method further comprises:
inserting, by the application server, an application server certificate into the HTML page;
sending, by the terminal to the QoS control function entity of the operator, a request carrying the application server certificate; and determining, by the QoS control function entity by using the application server certificate, that the QoS control is triggered by an application and charging the application.

7. A quality of service control method, wherein the method comprises:
parsing, by a terminal, a QoS control indication on an HTML page, and requesting QoS control from a QoS control function entity of an operator; and
receiving a request result returned by the QoS control function entity, and performing processing according to the request result.

8. The method according to claim 7, wherein the parsing, by a terminal, a QoS control indication on an HTML page, and requesting QoS control from a QoS control function entity of an operator comprises:
parsing, by the terminal, the QoS control indication on the HTML page, invoking a plug-in of browser installed in the terminal, and sending a QoS control request to the QoS control function entity of the operator by using the plug-in of browser.

9. The method according to claim 7, wherein the parsing, by a terminal, a QoS control indication on an HTML page, and requesting QoS control from a QoS control function entity of an operator comprises:
parsing, by the terminal, the QoS control indication on the HTML page, invoking an application programming interface API from a universal capability open platform, and sending a QoS control request to the QoS control function entity of the operator by using the universal capability open platform.

10. The method according to any one of claims 7 to 9, wherein the method further comprises:
before the sending, by the terminal, a QoS control request to the QoS control function entity of the operator, determining, according to preconfigured information, whether it is needed to prompt a user to send the QoS control request, or determining, according to a result of interaction between a plug-in of browser of a network operator and the QoS control function entity of the operator or between the universal capability open platform and the QoS control function entity of the operator, whether it is needed to prompt a user to send the QoS control request.

11. An application server, wherein the application server comprises:
an inserting unit, configured to insert a quality of service QoS control indication into a Hypertext Markup Language HTML page; and
a receiving unit, configured to receive an HTML page request of a terminal, and return the HTML page comprising the QoS quality of service QoS control indication to the terminal, so that the terminal requests QoS control from a QoS control function entity of an operator according to the QoS control indication on the HTML page, wherein the QoS control comprises QoS status query and/or QoS improvement.

12. The application server according to claim 11, wherein the QoS control indication is a java script, a newly defined HTML tag, or an HTML tag of a newly added attribute.

13. The application server according to claim 12, wherein the inserting unit is specifically configured to:
insert a java script into the HTML page, wherein the java script requires the terminal to invoke a QoS query API, and if a delay of a returned value of the QoS query API is greater than a preset time value, the terminal invokes a QoS request API to request that the QoS be less than the preset time value.

14. The application server according to claim 12, wherein the inserting unit is specifically configured to:
insert a newly defined HTML tag into the HTML page, wherein the newly defined HTML tag comprises a preset bandwidth and/or delay, and when data transmission is less than the preset bandwidth and/or the data transmission is greater than the preset delay, the terminal sends a request to the QoS control function entity of the operator, so that the data transmission satisfies the preset bandwidth and/or delay.

15. The application server according to claim 12, wherein the inserting unit is specifically configured to:
insert an HTML tag of a newly added attribute into the HTML page, wherein the newly added attribute comprises a preset bandwidth, and when data transmission is less than the preset bandwidth, the terminal sends a request to the QoS control function entity of the operator, so that the data transmission satisfies the preset bandwidth.

16. The application server according to any one of claims 11 to 15, wherein the application server further comprises:
an inserting subunit, configured to insert an application server certificate into the HTML page, wherein when the received HTML page request of the terminal has the application server certificate, the QoS control function entity determines, by using the application server certificate, that the QoS control is triggered by an application and charges the application.

17. A terminal, comprising:
a parsing unit, configured to parse a QoS control indication on an HTML page;
a sending unit, configured to request QoS control from a QoS control function entity of an operator; and
a presenting unit, configured to perform processing according to a request result returned by the QoS control function entity.

18. The terminal according to claim 17, wherein the parsing unit is specifically configured to:
parse the QoS control indication on the HTML page, invoke a plug-in of browser installed in the terminal, and send a QoS control request to the QoS control function entity of the operator by using the plug-in of browser.

19. The terminal according to claim 17, wherein the parsing unit is specifically configured to:
parse the QoS control indication on the HTML page, invoke an application programming interface API from a universal capability open platform, and send a QoS control request to the QoS control function entity of the operator by using the universal capability open platform.

20. The terminal according to any one of claims 17 to 19, wherein the terminal further comprises:
a prompting unit, configured to: before the terminal sends the QoS control request to the QoS control function entity of the operator, determine, according to preconfigured information, whether it is needed to prompt a user to send the QoS control request, or determine, according to a result of interaction between a plug-in of browser of a network operator and the QoS control function entity of the operator or between the universal capability open platform and the QoS control function entity of the operator, whether it is needed to prompt a user to send the QoS control request.
